(19) **Europäisches Patentamt / European Patent Office / Office européen des brevets**

(11) **EP 4 119 611 B1**

(12) **EUROPEAN PATENT SPECIFICATION**

(45) Date of publication and mention
of the grant of the patent:
**31.12.2025 Bulletin 2026/01**

(21) Application number: **21185234.8**

(22) Date of filing: **13.07.2021**

(51) International Patent Classification (IPC):
**C08L 23/16** (2006.01)

(52) Cooperative Patent Classification (CPC):
(C-Sets available)
**C08L 23/16;** C08L 2205/035; C08L 2207/02;
C08L 2207/20; Y02W 30/62 (Cont.)

(54) **POLYOLEFIN COMPOSITION COMPRISING POLYPROPYLENE HOMOPOLYMER AND RECYCLED PLASTIC MATERIAL**

POLYOLEFINZUSAMMENSETZUNG MIT POLYPROPYLENHOMOPOLYMER UND RECYCELTEM KUNSTSTOFFMATERIAL

COMPOSITION DE POLYOLÉFINE COMPRENANT UN HOMOPOLYMÈRE DE POLYPROPYLÈNE ET UN MATÉRIAU PLASTIQUE RECYCLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.01.2023 Bulletin 2023/03**

(73) Proprietor: **Borealis GmbH
1020 Vienna (AT)**

(72) Inventors:
• **KAHLEN, Susanne Margarete
4021 Linz (AT)**
• **MILEVA, Daniela
4021 Linz (AT)**
• **LEGRAS, Angelica Maëlle Delphine
4021 Linz (AT)**
• **BRAUN, Hermann
4021 Linz (AT)**

• **WANG, Jingbo
4021 Linz (AT)**
• **GRESTENBERGER, Georg
4021 Linz (AT)**
• **SALLES, Christophe
92400 Courbevoie (FR)**
• **BOISSARD, Emmanuel
92400 Courbevoie (FR)**

(74) Representative: **Maikowski & Ninnemann
Patentanwälte Partnerschaft mbB
Postfach 15 09 20
10671 Berlin (DE)**

(56) References cited:
EP-A1- 2 386 602        EP-A1- 3 165 473
WO-A1-2020/070175   US-A1- 2012 225 993
US-A1- 2020 385 555

(52) Cooperative Patent Classification (CPC): (Cont.)

C-Sets
**C08L 23/16, C08L 23/12, C08L 23/12, C08L 23/16,
C08L 23/12, C08L 23/0815, C08L 51/00, C08K 7/14**

**EP 4 119 611 B1**

**Description**

**Description**

The invention relates to a polyolefin composition comprising at least one polypropylene homopolymer and recycled plastic material, to an article comprising the polyolefin composition and a process for preparing such a polyolefin composition.

Polyolefins, in particular polyethylene and polypropylene are increasingly consumed in large amounts in a wide range of applications, including packaging for food and other goods, fibres, automotive components, and a great variety of manufactured articles. Taking into account the huge amount of waste collected compared to the amount of waste recycled back into the stream, there is still a great potential for intelligent reuse of plastic waste streams and for mechanical recycling of plastic wastes.

Generally, recycled quantities of polypropylene on the market are mixtures of both polypropylene (PP) and polyethylene (PE), this is especially true for post-consumer waste streams. Moreover, commercial recyclates from post-consumer waste sources are conventionally cross-contaminated with non-polyolefin materials such as polyethylene terephthalate, polyamide, polystyrene or non-polymeric substances like wood, paper, glass or aluminum. These cross-contaminations drastically limit final applications of recycling streams such that no profitable final uses remain. Polyolefinic recycling materials, especially from post-consumer waste streams, are a mixture of PE and PP. The better the quality of the recyclate is, the less available it is and the more expensive it is.

Customers that are asking for recyclates require similar properties as virgin ones. This is also valid for reinforced glass fibre compounds for structural products. The quality issue in recyclates compared to the virgin ones can be to some extent overcome by reinforcing the recyclates, where the reinforcement particles physically bond the dissimilar domains (PP and PE).

Recycled mixed plastics reinforced with glass fibre (GF) have also been studied. For example, recycled PP or PP/PE mixtures have been reinforced with GF or a hybrid GF with other fillers. EP 2845876 B1 describes a composition containing two or more resins and a glass fiber, comprising: a resin mixture comprising waste polyethylene (PE) and waste polypropylene (PP); a long glass fiber with a length of 10 mm or greater; and a rubber-based resin, wherein the composition comprises, based on 100 parts by weight of the resin mixture, 3-30 parts by weight of the long glass fiber, 10-50 parts by weight of the rubber-based resin, and 10-35 parts by weight of LDPE. A similar document is EP 2 386 602 A1.

Thus, there are examples of reinforced recyclates with a good tensile modulus and impact strength at the same time.

Automotive interior parts like dashboards, door claddings, trims etc. are commonly made from polymers; especially propylene based resins with fillers. Due to their chemical and thermal resistance they are widely used for these applications.

Furthermore, in recent years low emissions as well as low amounts of volatile organic compounds, low fogging, reduction of odour and improved organoleptic properties of the polymer materials have become additional key issues in automotive applications, often summarized under the 25 term EFO (Emission, FOG, Odour). Emissions and odours mainly originate from primary polymerization and degradation products (also established during heat exposure such as compounding or processing) of different chain length as well as from additives, and they also occur at normal atmospheric temperatures in the automotive interior end products. From a chemical point of view, emissions can be light, short-chain alkanes to oligomers. The total organic carbon emission of very light alkanes with a chain length of C3 - C10 is measured according to VDA 277:1995. Volatile organic compounds (VOC) are defined as emissions of very light to light alkanes with a chain length of C4 to C20; they are measured according to VDA 278:2002. The FOG value is defined as emissions of additives, alkanes and oligomers with a chain length of C16 to C32; it is also measured according to VDA 278:2002. Some of the emitted volatile substances can form precipitates called "fogging" on the windscreen which have a negative influence on the visibility and thereby affect the safety of driver and passengers. The term "fogging" indicates the emission of additives and aliphatic oligomers with a chain length of > C30. It designates gas releases from individual materials which then precipitate and can form a greasy film on the windscreen. Those condensable elements can be measured through a gravimetric fogging test, which determines the increase in weight due to condensation. Due to the fact that for the fogging value different substances than for VOC and FOG are responsible it is not possible to conclude from the VOC and FOG of a material to its fogging value. Moreover as fogging often is increased by additives which are added in order to achieve the required mechanical properties, reduced fogging values are a big challenge in the polymer industry.

This problem of fogging is even a higher problem when replacing virgin polymers against polymer recyclates. Standard recyclate materials suffer from bad odour and poor performance in emissions also including high residues coming out during exposure as reflected in their fogging test results.

Thus, when attempting to replace at least part of virgin polymers by recyclates for automotive applications not only thermomechanical properties of the polymer composition but also emission properties need to be addressed.

Thus, it was an object of the invention to provide a polyolefin composition, in particular for automotive applications, wherein at least a part of virgin polyolefin is replaced by polyolefin material recovered from waste plastic material while thermomechanical properties of such a polyolefin composition are at least maintained and at the same time emissions, odour and fogging properties of such a polyolefin composition are improved.

This object has been solved by providing a polyolefin composition comprising:

a) 20-30 wt% (based on the overall weight of the polymer composition) of at least one polypropylene homopolymer,
b) 10-45 wt% (based on the overall weight of the polymer composition) of a blend of recycled plastic material comprising polypropylene and polyethylene in a ratio between 3 : 7 and 49.5:1, which is recovered from a waste plastic material derived from post-consumer and/or post-industrial waste;
c) 7-15 wt% (based on the overall weight of the polymer composition) of at least one heterophasic propylene copolymer;
d) 1-4 wt% (based on the overall weight of the polymer composition) of at least one ethylene/octene copolymer (C2/C8) elastomer;
e) 15-25 wt% (based on the overall weight of the polymer composition) of glass fibers; and
f) 0.5-2.5 wt% (based on the overall weight of the polymer composition) of at least one coupling agent, and optionally further additives, wherein the sum of all ingredients add always up to 100 wt%;
wherein the polyolefin composition has

- a fogging value of 1.00 - 2.00 (measured gravimetrically according to ISO 75201, method B).

Thus, a polyolefin composition is provided that contains recycled plastic material, virgin polypropylene polymer, an heterophasic propylene copolymer , an ethylene/octene copolymer (C2/C8) elastomer, glass fibers that confer mechanical strength and a suitable coupling agent. This combination leads to a significant improvement in fogging.

It is to be understood that the present polyolefin composition does not contain talc (except the amounts present in the recyclate), rubber and is essentially free of peroxides, preferably the peroxide content based on the total weight of the polyolefin composition is below 0.5 wt%. For the purposes of the present description and of the subsequent claims, the term "recycled" is used to indicate that the material is recovered from post-consumer waste and/or industrial waste. Namely, post-consumer waste refers to objects having completed at least a first use cycle (or life cycle), i.e. having already served their first purpose and been through the hands of a consumer; while industrial waste refers to the manufacturing scrap which does normally not reach a consumer.

As described also further below, typical other components originating from the first use are thermoplastic polymers, like polystyrene and PA 6, talc, chalk, ink, wood, paper, limonene and fatty acids. The content of polystyrene (PS) and polyamide 6 (PA 6) in recycled polymers can be determined by Fourier Transform Infrared Spectroscopy (FTIR) and the content of talc, chalk, wood and paper may be measured by Thermogravimetric Analysis (TGA). It is to be understood the small amount of talc present in the recycled plastic material is not included in the amount of particulate material added subsequently to the polyolefin composition.

The term "virgin" denotes the newly produced materials and/or objects prior to first use and not being recycled. In case that the origin of the polymer is not explicitly mentioned the polymer is a "virgin" polymer.

The fogging value (measured gravimetrically according to ISO 75201, method B) of the present polyolefin composition may be in a range of 1.30 - 1.60, preferably in a range of 1.30 - 1.57, more preferably in a range of 1.3 - 1.5, even more preferably 1.40-1.50.

In an embodiment the present polyolefin composition is further characterized by a melt flow rate $MFR_2$ (230°C, 2.16 kg, measured according to ISO 1133) of at least 7 g/10 min; preferably in the range between 8 and 15 g/10 min, preferably between 9 and 15 g/10min, more preferably between 9 and 13g/10min. In one embodiment the polyolefin composition may have a fogging value of 1.30-1.40 and a $MFR_2$ of 9-15 g/10 min, such as 12-15 g/min.

In another embodiment, the present polyolefin composition is characterized by a tensile modulus (ISO 527-2) of at least 3.5 GPa, preferably of at least 4 GPa; more preferably of at least 4.5 GPa, in particular in a range between 4 and 5 GPa, more in particular in a range between 4.5 and 5 GPa.

In still another embodiment the present polyolefin composition has a flexural modulus (ISO 178) of at least 3.5 GPa, preferably of at least 4 GPa; more preferably of at least 4.5 GPa, in particular in a range between 4 and 5 GPa, more in particular in a range between 4.5 and 5 GPa.

In yet a further embodiment the present polyolefin composition has an impact strength (ISO179-1, Charpy 1eA +23°C) of at least 5.0 kJ/m$^2$, preferably of at least 6 kJ/m$^2$, more preferably at least 6.5 kJ/m$^2$, still more preferably of at least 7.0 kJ/m$^2$, in particular in a range between 6.0 and 9.0 kJ/m$^2$, more in particular in a range between 6.5 and 8.0 kJ/m$^2$, even more particular in a range between 7.0 and 8.0 kJ/m$^2$.

The polypropylene homopolymer used as virgin polymer in the present polyolefin composition is selected from a group comprising

- at least one polypropylene homopolymer (PPH-1) having a melt flow rate MFR$_2$ (230°C, 2.16 kg, measured according to ISO 1133) in the range of range of 10 to 30 g/10min, preferably of 15 to 25 g/10min, more preferably of 18 to 22 g/10 min;
- at least one polypropylene homopolymer (PPH-2) having a melt flow rate MFR$_2$ (230°C, 2.16 kg, measured according to ISO 1133) in the range of 60 to 100 g/10 min, preferably of 70 to 80 g/10min, more preferably of 73 to 77 g/10 min;
- at least one polypropylene homopolymer (PPH-3) having a melt flow rate MFR$_2$ (230°C, 2.16 kg, measured according to ISO 1133) in the range of 100 to 150 g/10 min, preferably of 100 to 130 g/10 min, preferably of 122 - 128 g/10 min;
- at least one polypropylene homopolymer (PPH-4) having a melt flow rate MFR$_2$ (230°C, 2.16 kg, measured according to ISO 1133) in the range of 50 to 100 g/10 min, preferably of 60 to 90 g/10 min, more preferably of 70 to 80 g/10 min.

Polypropylene Virgin Polymers

The properties and features of the different polypropylene homopolymers that may be used in the present polyolefin composition are described in the following.

Polypropylene homopolymer (PPH-1):

The at least one polypropylene homopolymer (PPH-1) has a melt flow rate MFR$_2$ (230°C, 2.16 kg, measured according to ISO 1133) in the range of 10 to 30 g/10min, preferably of 15 to 25 g/10min, preferably of 20 g/10 min; and a stiffness of higher than 1800 MPa.

The polypropylene homopolymer (PPH-1) consists substantially, i.e. of more than 99.7 wt%, still more preferably of at least 99.8 wt%, of propylene units, based on the weight of the propylene homopolymer (PPH-1). In a preferred embodiment only propylene units are detectable in the propylene homopolymer (PPH-1).

It is appreciated that the polypropylene homopolymer (PPH-1) features a low amount of xylene cold soluble (XCS) fraction. The polypropylene homopolymer (PPH-1) may have an amount of xylene cold solubles (XCS) fraction of not more than 4.0 wt%, preferably not more than 3.0 wt%, more preferably not more than 2.5 wt%, like in the range of 0.1 to 4.0 wt%, preferably in the range of 0.1 to 3.0 wt%, more preferably in the range from 0.1 to 2.5 wt%, based on the weight of the polypropylene homopolymer (PPH-1).

The polypropylene homopolymer (PPH-1) may have a heat deflection temperature (HDT) measured according to according to ISO 75-2 of at least 90°C. preferably at least 100°C, more preferably at least 115°C, like in the range of 90 to 160°C, preferably in the range of 100 to 150°C, more preferably 115 to 130°C.

The polypropylene homopolymer (PPH-1) may have a Charpy Impact Strength measured according to ISO 179-1eA:2000 at 23°C of at least 1.0 kJ/m$^2$, preferably, at least 2.0 kJ/m$^2$, like in the range of 1.0 to 10 kJ/m$^2$, preferably in the range of 2.0 to 5.0 kJ/m$^2$, like 2.5 kJ/m$^2$. The polypropylene homopolymer (PPH-1) may have a flexural modulus measured according to ISO 178 of at least 500 MPa, preferably at least 1500 MPa, like in the range of 500 to 3500 MPa, preferably in the range of 1500 to 2500 MPa, like 2000 MPa.

The polypropylene homopolymer (PPH-1) may comprise a nucleating agent, which is preferably a polymeric nucleating agent, more preferably an alpha-nucleating agent, e.g. a polymeric alpha-nucleating agent. The alpha-nucleating agent content of the polypropylene homopolymer (PPH-1), is preferably up to 5.0 wt%. In a preferred embodiment, the polypropylene homopolymer (PPH-1) contains not more than 3000 ppm, more preferably of 1 to 2000 ppm of alpha-nucleating agent.

The polypropylene homopolymer (PPH-1) is known in the art and commercially available, for example from Borealis AG.

Polypropylene homopolymer (PPH-2):

The at least one polypropylene homopolymer (PPH-2) has a melt flow rate MFR$_2$ (230°C, 2.16 kg, measured according to ISO 1133) in the range of 60 to 100 g/10 min, preferably in the range of 70 to 80 g/10min, even more preferably of 75 g/10 min; and a stiffness of higher than 1300 MPa.

The polypropylene homopolymer (PPH-2) consists substantially, i.e. of more than 99.7 wt%, still more preferably of at least 99.8 wt%, of propylene units, based on the weight of the polypropylene homopolymer (PPH-2). In a preferred embodiment only propylene units are detectable in the polypropylene homopolymer (PPH-2).

It is appreciated that the polypropylene homopolymer (PPH-2) features a low amount of xylene cold soluble (XCS) fraction. The polypropylene homopolymer (PPH-2) may have an amount of xylene cold solubles (XCS) fraction of not more than 4.0 wt%, preferably not more than 3.5 wt%, like in the range of 0.1 to 4.0 wt%, preferably in the range of 0.1 to 3.5 wt%, based on the weight of the polypropylene homopolymer (PPH-2).

The polypropylene homopolymer (PPH-2) may have a heat deflection temperature (HDT) measured according to according to ISO 75-2 of at least 50°C, preferably at least 60°C, more preferably at least 75°C, like in the range of 50 to 120°C, preferably in the range of 60 to 100°C, more preferably 75 to 90°C.

The polypropylene homopolymer (PPH-2) may have a Charpy Notched Impact Strength (NIS) measured according to ISO 179-1 eA at 23°C of at least 0.5 kJ/m$^2$, preferably, at least 0.7 kJ/m$^2$, like in the range of 0.5 to 1.5 kJ/m$^2$, preferably in the range of 0.7 to 1.3 kJ/m$^2$, like 1.0 kJ/m$^2$. The polypropylene homopolymer (PPH-2) may have a flexural modulus measured according to ISO 178 of at least 500 MPa, preferably at least 1000 MPa, like in the range of 500 to 2500 MPa, preferably in the range of 1000 to 2000 MPa, like 1500 MPa.

In case the polypropylene homopolymer (PPH-2) comprises an alpha-nucleating agent it is appreciated that the polypropylene homopolymer (PPH-2) may comprise the alpha-nucleating agent in an amount of up to 5.0 wt%, based on the weight of the polypropylene homopolymer (PPH-3), preferably up to 3000 ppm, like in the range of 1 to 2000 ppm. However, in a preferred embodiment the polypropylene homopolymer (PPH-2) does not comprise any nucleating agent, i.e. the polypropylene homopolymer (PPH-2) is not nucleated.

The polypropylene homopolymer (PPH-2) is known in the art and commercially available, for example from Borealis AG.

Polypropylene homopolymer (PPH-3):

The at least one polypropylene homopolymer (PPH-3) has a melt flow rate MFR$_2$ (230°C, 2.16 kg, measured according to ISO 1133) in the range of 100 to 150 g/10 min, preferably of 110 to 130 g/10 min, more preferably of 125 g/10 min.

The polypropylene homopolymer (PPH-3) may have a Charpy Notched Impact Strength (NIS) measured according to ISO 179-1 eA at 23°C of at least 0.5 kJ/m$^2$, preferably, at least 0.7 kJ/m$^2$, like in the range of 0.5 to 1.5 kJ/m$^2$, preferably in the range of 0.7 to 1.3 kJ/m$^2$, like 1.0 kJ/m$^2$. The polypropylene homopolymer (PPH-3) may have a flexural modulus measured according to ISO 178 of at least 500 MPa, preferably at least 1000 MPa, like in the range of 500 to 2500 MPa, preferably in the range of 1000 to 2000 MPa, like 1550 MPa.

The polypropylene homopolymer (PPH-3) is known in the art and commercially available, for example from Borealis AG.

Polypropylene Homopolymer (PPH-4):

The at least one polypropylene homopolymer (PPH-4) has a melt flow rate MFR$_2$ (230°C, 2.16 kg, measured according to ISO 1133) in the range of 50 to 100 g/10 min, preferably of 60 to 90 g/10 min, more preferably of 70 to 80 g/10 min.

The polypropylene homopolymer (PPH-4) may have a flexural modulus measured according to ISO 178 of at least 500 MPa, preferably at least 1000 MPa, like in the range of 500 to 2500 MPa, preferably in the range of 1000 to 2000 MPa, like 1400 to 1500 MPa.

The polypropylene has a number of 2,1 and 3,1 regio defects of from 0.01 to 1.2 mol%, preferably from 0.4 to 0.85 mol%, and more preferably from to 0.45 to 0.8 mol% as measured by $^{13}$C NMR.

The regio-defects of propylene polymers can be of three different types, namely 2,1-erythro (2,1e), 2,1-threo (2,1t) and 3,1 defects. A detailed description of the structure and mechanism of formation of regio defects in polypropylene can be found in Chemical Reviews 2000, 100(4), pages 1316-1327. These defects are measured using $^{13}$C NMR as described in more detail below.

The term "2,1 regio defects" as used in the present invention defines the sum of 2,1-erythro regio-defects and 2,1-threo regio defects.

It is also possible to use a mixture of at least two or more polyproyplene homopolymers. In case of two polypropylene homopolymers the amount of each polypropylene sums up to a total of 20-30 wt%, for example 10-15 wt%, preferably 12-13 wt% of a first polypropylene homopolymer and 10-15 wt%, 12-13 wt% of a second polypropylene.

Blend of recycled material

The present polyolefin composition may comprise 20 - 40 wt%, preferably 30 - 40 wt% (based on the overall weight of the polyolefin composition) of the blend of recycled plastic material comprising polypropylene and polyethylene and having a melt flow rate MFR$_2$ (230°C, 2.16 kg, measured according to ISO 1133) in the range of 5 - 100g/10 min, preferably of 10 - 80 g/10 min, more preferably of 15 - 50 g/10min.

The blend is obtained from a recycled waste stream. The blend can be either recycled post-consumer waste or post-industrial waste, such as for example from the automobile industry, or alternatively, a combination of both. It is particularly preferred that blend consists of recycled post-consumer waste and/or post-industrial waste.

In one aspect blend may be a polypropylene (PP) rich material of recycled plastic material that comprises significantly more polypropylene than polyethylene. Recycled waste streams, which are high in polypropylene can be obtained for example from the automobile industry, particularly as some automobile parts such as bumpers are sources of fairly pure polypropylene material in a recycling stream or by enhanced sorting. PP rich recyclates may also be obtained from yellow bag feedstock when sorted accordingly. The PP rich material may be obtainable by selective processing, degassing and filtration and/or by separation according to type and colors such as NIR or Raman sorting and VIS sorting. It may be obtained from domestic waste streams (i.e. it is a product of domestic recycling) for example the "yellow bag" recycling system organized under the "Green dot" organization, which operates in some parts of Germany.

Preferably, the polypropylene rich recycled material is obtained from recycled waste by means of plastic recycling processes known in the art. Such PP rich recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), mtm Plastics GmbH (DE) etc. None exhaustive examples of polypropylene rich recycled materials include: Dipolen®PP, Purpolen®PP (Mtm Plastics GmbH), MOPRYLENE PC B-420 White, MOPRYLENE PC B 440 (Morssinkhof Plastics, NL), , SYSTALEN PP-C24000; Systalen PP-C44000; Systalen PP-C14901, Systalen PP-C17900, Systalen PP-C2400, Systalen 13704 GR 015, Systalen 13404 GR 014, Systalen PP-C14900 GR000 (Der Grüne Punkt, DE), Vision (Veolia) PPC BC 2006 HS or PP MONO.

It is considered that the present invention could be applicable to a broad range of recycled polypropylene materials or materials or compositions having a high content of recycled polypropylene. The polypropylene-rich recycled material may be in the form of granules.

As mentioned previously, the polyolefin composition in accordance with the present invention comprises as blend a polymer blend, comprising a1) polypropylene and a2) polyethylene; wherein the weight ratio of a1) to a2) is from 3:7 to 49.5:1; and wherein the polymer blend is a recycled material.

Still a further preferred embodiment of the present invention stipulates that the ratio of polypropylene a1) to polyethylene a2) is from 7:1 to 40:1 and preferably from 10:1 to 30:1.

According to one embodiment, the blend of recycled plastic material comprises a relative amount of units derived from propylene of greater than 50 wt%, preferably greater than 53 wt%, more preferably greater than 60 wt%, more preferably greater than 70 wt%, more preferably greater than 75 wt%, more preferably greater than 80 wt%, still more preferably greater than 90 wt% and even more preferably greater than 95 wt% with respect to the total weight of the composition of blend.

Still a further preferred embodiment of the present invention stipulates that the content of polypropylene a1) in blend is in the range from 75 - 99 wt.-% and preferably in the range from 83 - 95 wt.-% based on the overall weight of blend A). The content of polypropylene a1) in blend may be determined by FTIR spectroscopy as described in the experimental section. More preferably component a1) comprises more than 95 wt.-%, preferably from 96 - 99.9 wt.- % isotactic polypropylene and most preferably consists of isotactic polypropylene.

Furthermore, blend may have a relative amount of units derived from ethylene of less than 47 wt%, more preferably less than 40 wt%, more preferably less than 30 wt%, more preferably less than 20 wt%, most preferably less than 10 wt%. Usually, the relative amount of units derived from ethylene is more than 5 wt% with respect to the total weight blend It is to be understood that the ethylene present is preferably ethylene derived from polyethylene and ethylene containing copolymers.

In another preferred embodiment of the present invention the content of polyethylene a2) in blend is in the range from 1 -25 wt.-%, preferably in the range from 5 - 20 wt% and more preferably in the range from 7 - 17 wt.-% based on the overall weight of blend A). The content of polyethylene a2) in blend may be determined by Crystex as described in the experimental section. More, preferably component a2) consists of polyethylene and ethylene containing copolymers.

The C2 (SF) content of the soluble fraction of the recyclate blend, as determined by quantitative FT-IR spectroscopy calibrated by $^{13}$C-NMR spectroscopy, is in a range from 25 - 40 wt%, preferably 27 - 35 wt%, more preferably 29 - 34 wt%.

The C2 (CF) content of the crystalline faction of the recyclate blend, as determined by quantitative FT-IR spectroscopy calibrated by $^{13}$C-NMR spectroscopy, is in a range from 4 - 20 wt%, preferably 5 - 15 wt%, more preferably 6 - 10 wt%.

The polyethylene fraction of the recycled material can comprise recycled high-density polyethylene (rHDPE), recycled medium-density polyethylene (rMDPE), recycled low-density polyethylene (rLDPE), linear low density polyethylene (LLDPE) and the mixtures thereof. In a certain embodiment, the recycled material is high density PE with an average density of greater than 0.8 g/cm$^3$, preferably greater than 0.9 g/cm$^3$, most preferably greater than 0.91 g/cm$^3$.

The polyethylene fraction of the recycled material may also comprise a plastomer. A plastomer is a polymer material that combines rubber-like properties with the processing ability of plastic. Important plastomers are ethylene-alpha olefin copolymers.

The ethylene based plastomer is preferably a copolymer of ethylene and a C$_4$ - C$_8$ alphaolefin. Suitable C$_4$ - C$_8$ alpha-olefins include 1-butene, 1-hexene and 1-octene, preferably 1-butene or 1-octene and more preferably 1-octene. Preferably, copolymers of ethylene and 1-octene are used. Such ethylene based plastomers are commercially available, i.a. from Borealis AG (AT) under the tradename Queo, from DOW Chemical Corp (USA) under the tradename Engage or Affinity, or from Mitsui under the tradename Tafmer. Alternatively, the ethylene based plastomer can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the art skilled persons. It is possible that the ethylene based plastomer is already contained in the post - consumer and/or post-industrial waste being used for the production of recyclate blend. Alternatively, it is possible that the ethylene based plastomer is added to the post-consumer and/or post-industrial waste during the waste plastic recycling process where the recyclate blend is produced.

Another preferred embodiment of the present invention stipulates that the recyclate blend comprises less than 5 wt.-%, preferably less than 3 wt.-% and more preferably from 0.01 to 2 wt.-% based on the overall weight of the recyclate blend of thermoplastic polymers different from a1) and a2), more preferably less than 4.0 wt.-% PA 6 and less than 5 wt.-% polystyrene, still more preferably blend comprises 0.5 - 3 wt.-% polystyrene.

According to still another preferred embodiment of the present invention the recyclate blend comprises less than 5 wt.-%, preferably less than 4 wt.-% and more preferably from 0.01 to 4 wt.-% based on the overall weight of the recyclate blend of talc.

In another preferred embodiment of the present invention the recyclate blend comprises less than 4 wt.-%, preferably less than 3 wt.-% and more preferably from 0.01 to 2 wt.-% based on the overall weight of the recyclate blend of chalk.

According to another preferred embodiment of the present invention the recyclate blend comprises less than 1 wt.-%, preferably less than 0.5 wt.-% and more preferably from 0.01 to 1 wt.-% based on the overall weight of the recyclate blend of paper.

Still another preferred embodiment of the present invention stipulates that the recyclate blend comprises less than 1 wt.-%, preferably less than 0.5 wt.-% and more preferably from 0.01 to 1 wt.-% based on the overall weight of the recyclate blend of wood.

In another preferred embodiment of the present invention the recyclate blend comprises less than 1 wt.-%, preferably less than 0.5 wt.-% and more preferably from 0.01 to 1 wt.-% based on the overall weight of the recyclate blend of metal.

According to the present invention, the recyclate blend has a content of limonene as determined using solid phase microextraction (HS-SPME-GC-MS) of 0.1 ppm to 100 ppm, more preferably from 1 ppm to 50 ppm, most preferably from 2 ppm to 35 ppm. Limonene is conventionally found in recycled polyolefin materials and originates from packaging applications in the field of cosmetics, detergents, shampoos and similar products. Therefore, the recyclate blend contains limonene, when the recyclate blend contains material that originates from such types of domestic waste streams.

The fatty acid content is yet another indication of the recycling origin of the recyclate blend. However, in some cases, the fatty acid content may be below the detection limit due to specific treatments in the recycling process. According to the present invention, the recyclate blend preferably has a content of fatty acids as determined using solid phase microextraction (HS-SPME-GC-MS) of from 1 ppm to 200 ppm, preferably from 1 ppm to 150 ppm, more preferably from 2 ppm to 100 ppm, most preferably from 3 ppm to 80 ppm.

In a preferred aspect, the recyclate blend (i) contains less than 5 wt%, preferably less than 1.5 wt% polystyrene; and/or (ii) contains less than 3.5 wt%, preferably less than 1 wt% talc; and/or (iii) contains less than 1.0 wt%, preferably less than 0.5 wt% polyamide.

Due to the recycling origin blend may also contain: organic fillers, and/or inorganic fillers, and/or additives in amounts of up to 10 wt%, preferably 3 wt% with respect to the weight of the blend .

Thus, in an embodiment of the present polyolefin composition blend of recycled plastic material comprises

A-1) a content of polypropylene of 50 - 99 wt%,
A-2) a content of polyethylene of 1 - 40 wt%,
A-3) 0 - 5.0 wt% of polystyrene and/or copolymers such as ABS,
A-4) 0 - 3.0 wt% stabilizers,
A-5) 0 - 4.0 wt% polyamide-6,
A-6) 0 - 3.0 wt% talc,
A-7) 0 - 3.0 wt% chalk,
A-8) 0 - 1.0 wt% paper,
A-9) 0 - 1.0 wt% wood,
A-10) 0 to 0.5 wt% metal,
A-11) 0.1 ppm - 100 ppm of limonene as determined by using solid phase microextraction (HS-SPME-GC-MS), and
A-12) 0 - 200 ppm total fatty acid content as determined by using solid phase microextraction (HS-SPME-GC-MS)
wherein all amounts are given with respect to the total weight of the recyclate blend.

As stated above the recyclate blend may include one or more further components, selected from:

A-4) up to 3.0 wt% stabilizers, preferably up to 2.0 wt% stabilizers,

A-5) up to 4.0 wt% polyamide-6, preferably up to 2.0 wt% polyamide-6,

A-6) up to 3.0 wt% talc, preferably up to 1.0 wt% talc,

A-7) up to 3.0 wt% chalk, preferably up to1.0 wt% chalk,

A-8) up to 1.0 wt% paper, preferably up to 0.5 wt% paper,

A-9) up to 1.0 wt% wood, preferably up to 0.5 wt% wood, and

A-10) up to 0.5 wt% metal, preferably up to 0.1 wt% metal,

based on the overall weight of the recyclate blend.

In one embodiment blend of recycled plastic material may have a melt flow rate (ISO 1133, 2.16 kg, 230°C) in the range of 4 to 20 g/10min, preferably of 5 to 15 g/10min, more preferably of 6 to 12 g/10min.

According to another embodiment blend of recycled plastic material may have a melt flow rate $MFR_2$ (ISO 1133, 230°C, 2.16 kg) in the range of 16 to 50 g/10 min and preferably in the range of 18 to 22 g/10 min.

According to still another embodiment the blend of recycled plastic material may have a melt flow rate $MFR_2$ (ISO 1133, 230°C, 2.16 kg) in the range of 5 to 100 g/10 min, preferably 10 to 85 g/10 min, preferably in the range of 15 to 50 g/10 min, more preferably in the range of 20 to 50 g/10 min or 20 to 30 g/10 min or 20 to 25 g/ 10 min. In one embodiment $MFR_2$ of the blend may be 80 to 90 g/10min. In another embodiment $MFR_2$ of the blend may be 20 to 30 g/10 min.

In a further preferred embodiment of the present invention the Charpy Notched Impact Strength measured according to ISO 179-1 eA at 23°C of the recyclate blend is more than 3.0 $kJ/m^2$, preferably in the range from 4.0 to 8.0 $kJ/m^2$ and more preferably in the range from 5.0 to 6.0 $kJ/m^2$.

A further preferred embodiment of the present invention stipulates that the Tensile Modulus measured according to ISO527-2 of the recyclate blend is in the range of 800 to 1500 MPa and preferably in the range of 1100 to 1400 MPa.

The properties of different recyclate blends that may be used are now described.

Blend A1:

total C2 content 10-15 wt%, C2 (CF) content 8-12 wt%, C2 (SF) content 29-32 wt%, $MFR_2$ 12 - 14 g/ 10 min, tensile modulus 1200 - 1300 MPa, Impact strength (charpy test 23°C) 5-6 $KJ/m^2$;

Blend A2:

total C2 content 6-7 wt%, C2 (CF) content 4-5 wt%, C2 (SF) content 29-30 wt%, $MFR_2$ 80 - 85 g/ 10 min, tensile modulus 1200 - 1300 MPa, Impact strength (charpy test 23°C) 3-4 $KJ/m^2$;

Blend A3:

total C2 content 8-9 wt%, C2 (CF) content 4-5 wt%, C2 (SF) content 30-34 wt%, $MFR_2$ 32 - 34 g/ 10 min, tensile modulus 1300 - 1400 MPa, Impact strength (charpy test 23°C) 5-6.5 $KJ/m^2$;

Blend A4:

$MFR_2$ 18-19 g/ 10 min, tensile modulus 1200 - 1300 MPa, Impact strength (charpy test 23°C) 5-6 $KJ/m^2$;

Blend A5:

total C2 content 9-11 wt%, C2 (CF) content 7-8 wt%, C2 (SF) content 32-33 wt%, $MFR_2$ 24 - 25 g/ 10 min, tensile modulus 1300 - 1400 MPa, Impact strength (charpy test 23°C) 5-6 $KJ/m^2$;

Blend A6:

total C2 content 7-9 wt%, C2 (CF) content 5-7 wt%, C2 (SF) content 29-34 wt%, $MFR_2$ 23 - 25 g/ 10 min, tensile modulus 1100 - 1300 MPa, Impact strength (charpy test 23°C) 4-5 $KJ/m^2$;

Blend A7:

total C2 content 7-9 wt%, C2 (CF) content 5-7.5 wt%, C2 (SF) content 27-33 wt%, $MFR_2$ 15 - 17 g/ 10 min, tensile modulus 1200 - 1300 MPa, Impact strength (charpy test 23°C) 5-6 $KJ/m^2$;

Heterophasic propylene copolymer

The at least one heterophasic propylene copolymer may be used in an amount of 8 to 13 wt%, preferably 9 to 11 wt% (based on the overall weight of the polymer composition).

In an embodiment the at least one heterophasic propylene copolymer may be at least one reactor modified heterophasic propylene copolymer (HPC) having a melt flow rate $MFR_2$ (230°C, 2.16 kg, measured according to ISO 1133) in the range of 10 to 25 g/10 min, preferably of 15 to 20 g/10 min, more preferably of 17-19 g/10 min.

The heterophasic propylene copolymer (HPC) may have a Charpy Notched Impact Strength (NIS) measured according to ISO 179-1 eA at 23°C of at least 25 kJ/m$^2$, preferably at least 30 kJ/m$^2$, more preferably at least 35 kJ/m$^2$, like in the range of 25 to 45 kJ/m$^2$, preferably in the range of 30 to 40 kJ/m$^2$, like 35 kJ/m$^2$.The heterophasic propylene copolymer (HPC) may have a flexural modulus measured according to ISO 178 of at least 500 MPa, preferably at least 700 MPa, like in the range of 500 to 1500 MPa, preferably in the range of 700 to 1000 MPa, like 800 MPa.

The heterophasic propylene copolymer (HPC) is known in the art and commercially available, for example from Borealis AG.

In a further embodiment the heterophasic propylene copolymer (HPC) may be aerated. Such an aerated heterophasic propylene copolymer (HPC-AR) is known in the art and commercially available, for example from Borealis AG.

Elastomer

The at least one elastomer may be used in an amount of 1.5 to 3.5 wt%, preferably 1.5 to 2.5 wt%, such as 2 wt% (based on the overall weight of the polymer composition).

The at least one elastomer is an ethylene/octene copolymers (C2/C8 elastomers), in particular an ethylene based 1-octene elastomer.

The elastomer preferably used is a ultra-low density ethylene-octene copolymer (EO-CoP) with good flow characteristics and impact properties in blends with polypropylene and polyethylene. The ethylene based 1-octene elastomer may have an MFR (190 °C, 2.16 kg) between 0.5 and 8 g/10 min, a density between 850 - 860 kg/m$^3$. Such a compound is commercially available

Glass fibers / coupling agent

As mentioned above, the polyolefin composition according to the invention comprises glass fibers, in particular short glass fibers. The glass fibers used in the fiber reinforced composite preferably have an average fiber length in the range of from 2.0 to 10.0 mm, preferably in the range of 2.0 to 8.0 mm, even more preferably in the range of 2.0 to 6.0 mm, still more preferably in the range of 3.0 to 5.5 mm, even more preferably of 3.5 - 5.0 mm.

It is further preferred that the short glass fibers used in the fiber reinforced composite preferably have an average diameter of from 5 to 20 $\mu$m, more preferably from 8 to 18 $\mu$m, still more preferably 8 to 15 $\mu$m, even more preferably 10-15 $\mu$m, preferably of 11-14 $\mu$m, preferably 12-14 $\mu$m, more preferably of 12.3-13.7 $\mu$m, even more preferably of 12.5-13.5 $\mu$m.

In one preferred embodiment glass fibers are used which have a fiber length of 3.0 - 5.0 mm (average 4.0 mm), and a fiber diameter of 12.3 - 13.7 $\mu$m (average 13 $\mu$m). In another preferred embodiment glass fibers are used which have a fiber length of 3.5 - 5.5 mm (average 4.5 mm), and a fiber diameter of 12 - 14 $\mu$m (average 13 $\mu$m).

As also mentioned above, the polyolefin composition according to the invention comprises at least one coupling agent. The at least one coupling agent is a functionalized polypropylene, in particular a polypropylene functionalized with maleic anhydride (MAH). The amount of coupling agent in the polyolefin composition may be 1-2 wt%, preferably 1-1.5 wt%, such as 1 wt% or 1.25 wt%.

In the following, more specific embodiments of the polymer composition in accordance with the present invention are described.

In a first embodiment a polyolefin composition is provided that comprises

a) 20-30 wt% (based on the overall weight of the polymer composition) of at least one polypropylene homopolymer (PPH-1) having a melt flow rate $MFR_2$ (230°C, 2.16 kg, measured according to ISO 1133) in the range of 10 to 30 g/10min, preferably of 15 to 25 g/10min, preferably of 20 g/10 min,

b) 30-40 wt% (based on the overall weight of the polymer composition) of a blend of recycled plastic material comprising polypropylene and polyethylene in a ratio between 3 : 7 and 49.5:1, which is recovered from a waste plastic material derived from post-consumer and/or post-industrial waste;

c) 8-12 wt% (based on the overall weight of the polymer composition) of at least one heterophasic propylene copolymer (HPC) having a melt flow rate $MFR_2$ (230°C, 2.16 kg, measured according to ISO 1133) in the range of 10 to 25 g/10 min, preferably of 15 to 20 g/10 min, more preferably of 17-19 g/10 min;

d) 1-3 wt% (based on the overall weight of the polymer composition) of at least one ethylene based 1-octene elastomer may have an MFR$_2$ (190 °C, 2.16 kg) between 0.5 and 8 g/10 min,

e) 15-25 wt% (based on the overall weight of the polymer composition) of glass fibers; and

f) 1-1.5 wt% (based on the overall weight of the polymer composition) of at least one coupling agent, and optionally further additives, wherein the sum of all ingredients add always up to 100 wt%;

Such a first polyolefin composition may have

- a fogging value of 1.3 - 1.5 (measured gravimetrically according to ISO 75201, method B),
- a melt flow rate MFR$_2$ (230°C, 2.16 kg, measured according to ISO 1133) in the range of 8-10 g/10 min; preferably in the range of 8.5- 9.5 g/10 min,;
- a tensile modulus (ISO 527-2) of at least 4 GPa, preferably at least 4.5 GPa,
- an impact strength (Charpy 1eA +23°C) of at least 6 kJ/m$^2$, preferably of at least 6.5 kJ/m$^2$, preferably of at least 7.0 kJ/m$^2$.

In a second embodiment a polyolefin composition is provided that comprises

a1) 10-15 wt% (based on the overall weight of the polymer composition) of at least one polypropylene homopolymer (PPH-1) having a melt flow rate MFR$_2$ (230°C, 2.16 kg, measured according to ISO 1133) in the range of 10 to 30 g/10min, preferably of 15 to 25 g/10min, preferably of 20 g/10 min,

a2) 10-15 wt% (based on the overall weight of the polymer composition) of at least one polypropylene homopolymer (PPH-3) having a melt flow rate MFR$_2$ (230°C, 2.16 kg, measured according to ISO 1133) in the range of 100 to 150 g/10 min, preferably of 110 to 130 g/10 min, more preferably of 125 g/10 min;

b) 30-40 wt% (based on the overall weight of the polymer composition) of a blend of recycled plastic material comprising polypropylene and polyethylene in a ratio between 3 : 7 and 49.5:1, which is recovered from a waste plastic material derived from post-consumer and/or post-industrial waste;

c) 8-12 wt% (based on the overall weight of the polymer composition) of at least one heterophasic propylene copolymer (HPC) having a melt flow rate MFR$_2$ (230°C, 2.16 kg, measured according to ISO 1133) in the range of 10 to 25 g/10 min, preferably of 15 to 20 g/10 min, more preferably of 17-19 g/10 min;

d) 1-3 wt% (based on the overall weight of the polymer composition) of at least one ethylene based 1-octene elastomer may have an MFR (190 °C, 2.16 kg) between 0.5 and 8 g/10 min,

e) 15-25 wt% (based on the overall weight of the polymer composition) of glass fibers; and

f) 1-1.5 wt% (based on the overall weight of the polymer composition) of at least one coupling agent, and optionally further additives, wherein the sum of all ingredients add always up to 100 wt%;

Such a second polyolefin composition may have

- a fogging value of 1.3 - 1.45 (measured gravimetrically according to ISO 75201, method B),
- a melt flow rate MFR$_2$ (230°C, 2.16 kg, measured according to ISO 1133) in the range of 10-15 g/10 min; preferably in the range of 11- 13 g/10 min, such as 12 g/10 min;
- a tensile modulus (ISO 527-2) of at least 4 GPa, preferably at least 4.5 GPa,
- an impact strength (Charpy 1 eA +23°C) of at least 5.5 kJ/m$^2$, preferably of at least 6.0 kJ/m$^2$, preferably of at least 6.5 kJ/m$^2$.

Additives

In a further embodiment the polyolefin composition may comprise further additives. Examples of additives for use in the composition are pigments or dyes (for example carbon black), stabilizers (anti-oxidant agents), anti-acids and/or anti-UVs, antistatic agents, nucleating agents and utilization agents (such as processing aid agents). Preferred additives are carbon black, at least one antioxidant and/or at least one UV stabilizer.

Generally, the amount of these additives is in the range of 0 to 5.0 wt%, preferably in the range of 0.01 to 3.0 wt%, more preferably from 0.01 to 2.0 wt% based on the weight of the total composition.

Examples of antioxidants which are commonly used in the art, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl) diphenylamine), or antioxidant blends. Preferred antioxidants may be Tris (2,4-di-t-butylphenyl) phosphite and/or Octadecyl 3-(3',5'-di-tert. butyl-4-hydroxyphenyl)propionate.

Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1).

Common antiblocking agents are natural silica such as diatomaceous earth (such as CAS No. 60676-86-0 (SuperfFloss™), CAS-No. 60676-86-0 (SuperFloss E™), or CAS-No. 60676-86-0 (Celite 499™)), synthetic silica (such as CAS-No. 7631-86-9, CAS-No. 7631-86-9, CAS-No. 7631-86-9, CAS-No. 7631-86-9, CAS-No. 7631-86-9, CAS-No. 7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS -No. 52829-07-9, Tinuvin 770); 2-hydroxy-4-n-octoxy-benzophenone (CAS-No. 1843-05-6, Chimassorb 81). Preferred UV stabilizers may be low and/or high molecular weight UV stabilizers such as n-Hexadecyl- 3,5-di-t-butyl-4-hydroxybenzoate, A mixture of esters of 2,2,6,6-tetramethyl-4-piperidinol and higher fatty acids (mainly stearic acid) and/or Poly((6-morpholino-s-triazine-2,4-diyl)(1,2,2,6,6-pentamethyl-4-piperidyl)imino)hexameth-ylene (1,2,2,6,6-pentamethyl-4-piperidyl)imino)).

Alpha nucleating agents like sodium benzoate (CAS No. 532-32-1); 1,3:2,4-bis(3,4-dimethylbenzylidene)sorbitol (CAS 135861-56-2, Millad 3988). Suitable antistatic agents are, for example, glycerol esters (CAS No. 97593-29-8) or ethoxylated amines (CAS No. 71786-60-2 or 61791-31-9) or ethoxylated amides (CAS No. 204-393-1). Usually these additives are added in quantities of 100-2.000 ppm for each individual component of the polymer.

It is appreciated that the present invention also refers to a process for producing the polyolefin compositions as defined herein. The process comprises the steps of

- providing a mixture of the at least polypropylene homopolymer a); the blend of recycled material b), the at least one heterophasic propylene copolymer c); the at least one ethylene/octene copolymer (C2/C8) elastomer d), glass fibers e) and the at least one coupling agent f) in the required amounts;
- melting the mixture in an extruder, and
- optionally pelletizing the obtained polyolefin composition.

For the purposes of the present invention, any suitable melting and mixing means known in the art may be used for carrying out the mixing and melting.

However, the melting and mixing step preferably takes place in a mixer and/or blender, high or low shear mixer, high-speed blender, or a twin-screw extruder. Most preferably, the melting and mixing step takes place in a twin-screw extruder such as a co-rotating twin-screw extruder. Such twin-screw extruders are well known in the art and the skilled person will adapt the melting and mixing conditions (such as melting temperature, screw speed and the like) according to the process equipment.

The polyolefin composition according to the invention can be used for a wide range of applications, for example in the manufacture of structural products, appliances, automotive articles, pipes, films, geo-membranes, roofing applications, pond liners, packaging, caps and closures. Additionally, due to the satisfactory tensile properties of the compositions of the present invention, they may be employed as films (with a thickness of 400 microns or less) or for flexible foils (with a thickness of more than 400 microns) such as geo-membranes for agriculture, roofing applications and as pond liners. Typically, the compositions described herein are used as a core layer of a multilayer sheet (e.g. a three layer geo-membrane sheet), where the external layers are made of various kinds of polyolefin materials. The most preferred application is the use in the automotive area.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

**Test Methods**

The following definitions of terms and determination methods apply for the above general description of the invention as well as to the below examples unless otherwise defined.

**a) Determination of the content of isotactic polypropylene (iPP), polystyrene (PS), ethylene, PVC and Polyamide-6 in the recyclate blend**

**Sample preparation**

All calibration samples and samples to be analyzed were prepared in similar way, on molten pressed plates. Around 2 to 3 g of the compounds to be analyzed were molten at 190°C. Subsequently, for 20 seconds 60 to 80 bar pressure was applied in a hydraulic heating press. Next, the samples are cooled down to room temperature in 40 seconds in a cold press under the same pressure, in order to control the morphology of the compound. The thickness of the plates was controlled by metallic calibrated frame plates 2.5 cm by 2.5 cm, 100 to 200 $\mu$m thick (depending MFR from the sample); two plates were produced in parallel at the same moment and in the same conditions. The thickness of each plate was measured before any FTIR measurements; all plates were between 100 to 200 $\mu$m thick. To control the plate surface and to avoid any interference during the measurement, all plates were pressed between two double-sided silicone release papers. In case of powder samples or heterogeneous compounds, the pressing process was repeated three times to increase homogeneity by pressed and cutting the sample in the same conditions as described before.

**Spectrometer:**

Standard transmission FTIR spectroscope such as Bruker Vertex 70 FTIR spectrometer was used with the following set-up:

- a spectral range of 4000-400 cm$^{-1}$,
- an aperture of 6 mm,
- a spectral resolution of 2 cm$^{-1}$,
- with 16 background scans, 16 spectrum scans,
- an interferogram zero filling factor of 32,
- Norton Beer strong apodisation.

Spectrum were recorded and analysed in Bruker Opus software.

**Calibration samples:**

As FTIR is a secondary method, several calibration standards were compounded to cover the targeted analysis range, typically from:

- 0.2 wt.-% to 2.5 wt.-% for PA

- 0.1 wt.-% to 5 wt.-% for PS

- 0.2 wt.-% to 2.5 wt.-% for PET

- 0.1 wt.-% to 4 wt.-% for PVC

The following commercial materials were used for the compounds: Borealis HC600TF as iPP, Borealis FB3450 as HDPE and for the targeted polymers such RAMAPET N1S (Indorama Polymer) for PET, Ultramid$^{®}$ B36LN (BASF) for Polyamide 6, Styrolution PS 486N (Ineos) for High Impact Polystyrene (HIPS), and for PVC Inovyn PVC 263B (under powder form).

All compounds were made at small scale in a Haake kneader at a temperature below 265°C and less than 10 minutes to avoid degradation. Additional antioxidant such as Irgafos 168 (3000 ppm) was added to minimise the degradation.

**Calibration:**

The FTIR calibration principal was the same for all the components: the intensity of a specific FTIR band divided by the plate thickness was correlated to the amount of component determined by $^{1}$H or $^{13}$C solution state NMR on the same plate.

Each specific FTIR absorption band was chosen due to its intensity increase with the amount of the component concentration and due to its isolation from the rest of the peaks, whatever the composition of the calibration standard and real samples.

This methodology was described in the publication from Signoret et al. "Alterations of plastic spectra in MIR and the potential impacts on identification towards recycling", Resources, conservation and Recycling journal, 2020, volume 161, article 104980.

The wavelength for each calibration band was:

- 3300 cm$^{-1}$ for PA,
- 1601 cm$^{-1}$ for PS,
- 1410 cm$^{-1}$ for PET,
- 615 cm$^{-1}$ for PVC,
- 1167cm$^{-1}$ for iPP.

For each polymer component i, a linear calibration (based on linearity of Beer-Lambert law) was constructed. A typical linear correlation used for such calibrations is given below:

$$x\ \ i = A_i \cdot \frac{E_i}{d} + B_i$$

where x$_i$ is the fraction amount of the polymer component i (in wt%)

E$_i$ is the absorbance intensity of the specific band related to the polymer component i (in a.u. absorbance unit). These specific bands are, 3300 cm$^{-1}$ for PA, 1601 cm$^{-1}$ for PS, 1410 cm$^{-1}$ for PET, 615 cm$^{-1}$ for PVC, 1167 cm$^{-1}$ for iPP

d is the thickness of the sample plate

A$_i$ and B$_i$ are two coefficients of correlation determined for each calibration curve

No specific isolated band can be found for C2 rich fraction and as a consequence the C2 rich fraction is estimated indirectly,

$$x_{C2\ rich} = 100 - (x_{iPP} + x_{PA} + x_{PS} + x_{PET} + x_{EVA} + x_{PVC} + x_{chalk} + x_{talc})$$

The EVA, Chalk and Talc contents are estimated *"semi-quantitatively"*. Hence, this renders the C2 rich content *"semi-quantitative"*.

For each calibration standard, wherever available, the amount of each component is determined by either $^1$H or $^{13}$C solution state NMR, as primary method (except for PA). The NMR measurements were performed on the exact same FTIR plates used for the construction of the FTIR calibration curves.

Calibration standards were prepared by blending iPP and HDPE to create a calibration curve. The thickness of the films of the calibration standards were 300 μm. For the quantification of the iPP, PS and PA 6 content in the samples quantitative IR spectra were recorded in the solid-state using a Bruker Vertex 70 FTIR spectrometer. Spectra were recorded on 25x25 mm square films of 50 to 100 μm thickness prepared by compression moulding at 190°C and 4 to 6 mPa. Standard transmission FTIR spectroscopy was employed using a spectral range of 4000 to 400 cm$^{-1}$, an aperture of 6 mm, a spectral resolution of 2 cm$^{-1}$, 16 background scans, 16 spectrum scans, an interferogram zero filling factor of 32 and Norton Beer strong apodisation.

The absorption of the band at 1167 cm$^{-1}$ in iPP was measured and the iPP content was quantified according to a calibration curve (absorption/thickness in cm versus iPP content in wt.-%).

The absorption of the band at 1601 cm$^{-1}$ (PS) and 3300 cm$^{-1}$ (PA6) were measured and the PS- and PA6 content quantified according to the calibration curve (absorption/thickness in cm versus PS and PA content in wt.-%). The content of ethylene was obtained by subtracting the content of iPP, PS and PA6 from 100. The analysis was performed as double determination.

**b) Amount of Talc and Chalk in recyclate blend** were measured by Thermogravimetric Analysis (TGA); experiments were performed with a Perkin Elmer TGA 8000. Approximately 10-20 mg of material was placed in a platinum pan. The temperature was equilibrated at 50 °C for 10 minutes, and afterwards raised to 950 °C under nitrogen at a heating rate of 20 °C/min. The weight loss between ca. 550°C and 700°C (WCO2) was assigned to CO$_2$ evolving from CaCO$_3$, and therefore the chalk content was evaluated as:

$$\text{Chalk content} = 100/44 \times WCO2$$

Afterwards the temperature was lowered to 300°C at a cooling rate of 20 °C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as:

$$\text{Ash content} = (\text{Ash residue}) - 56/44 \times WCO2 - Wcb$$

Where Ash residue is the weight% measured at 900°C in the first step conducted under nitrogen. The ash content is estimated to be the same as the talc content for the investigated recyclates.

### c) Amount of Paper, Wood in recyclate blend

Paper and wood were determined by conventional laboratory methods including milling, floatation, microscopy and Thermogravimetric Analysis (TGA) or floating techniques (dissolution of the polymer and then gravimetric determination of the paper and wood content).

**d) Amount of Metals in recyclate blend** was determined by x ray fluorescence (XRF).

**e) Amount of Limonene in recyclate blend** was determined by solid phase microextraction (HS-SPME-GC-MS). Additional details are given below with respect to the specific sample.

**f) Amount of total fatty acids in recyclate blend**
was determined by solid phase microextraction (HS-SPME-GC-MS).

Additional details are given below with respect to the specific sample.

**g) Xylene Cold Solubles (XCS) in recyclate blend** are measured at 25°C according ISO 16152; first edition; 2005-07-01.

### h) Crystex analysis of recyclate blend

#### Crystalline and soluble fractions method

The crystalline (CF) and soluble fractions (SF) of the polypropylene (PP) compositions as well as the comonomer content and intrinsic viscosities of the respective fractions were analyzed by the CRYSTEX QC, Polymer Char (Valencia, Spain). The crystalline and amorphous fractions are separated through temperature cycles of dissolution at 160 °C, crystallization at 40 °C and re-dissolution in a 1,2,4-trichlorobenzene (1,2,4-TCB) at 160 °C. Quantification of SF and CF and determination of ethylene content (C2) of the parent EP copolymer and its soluble and crystalline fractions are achieved by means of an infrared detector (IR4) and an online 2-capillary viscometer which is used for the determination of the intrinsic viscosity (iV). The IR4 detector is a multiple wavelength detector detecting IR absorbance at two different bands (CH3 and CH2) for the determination of the concentration and the Ethylene content in Ethylene-Propylene copolymers. IR4 detector is calibrated with series of 8 EP copolymers with known Ethylene content in the range of 2 wt.-% to 69 wt.-% (determined by $^{13}$C-NMR spectroscopy) and various concentration between 2 and 13mg/ml for each used EP copolymer used for calibration.

The amount of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%.

The intrinsic viscosity (iV) of the parent EP copolymer and its soluble and crystalline fractions are determined with a use of an online 2-capillary viscometer and are correlated to corresponding iV's determined by standard method in decalin according to ISO 1628. Calibration is achieved with various EP PP copolymers with iV = 2-4 dL/g.

A sample of the PP composition to be analyzed is weighed out in concentrations of 10mg/ml to 20mg/ml. After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 800 rpm.

A defined volume of the sample solution is injected into the column filled with inert support where the crystallization of the sample and separation of the soluble fraction from the crystalline part is taking place. This process is repeated two times. During the first injection the whole sample is measured at high temperature, determining the iV[dl/g] and the C2[wt.-%] of the PP composition. During the second injection the soluble fraction (at low temperature) and the crystalline fraction (at high temperature) with the crystallization cycle are measured (wt.-% SF, wt.-% C2, iV).

EP means ethylene propylene copolymer.
PP means polypropylene.

**i) Regio-defects:** Quantification of microstructure by NMR spectroscopy

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probe head at 125°C using nitrogen gas for all pneumatics. Approximately 200 mg of material was dissolved in 3 ml of 1,2-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents

**j) Melt flow rates** were measured with a load of 2.16 kg (MFR$_2$) at 230 °C or 190°C as indicated. The melt flow rate is that quantity of polymer in grams which the test apparatus standardized to ISO 1133 extrudes within 10 minutes at a temperature of 230 °C (or 190°C) under a load of 2.16 kg.

**k) Tensile Modulus, Tensile Strength, Tensile Strain at Break, Tensile Strain at Tensile Strength, Tensile Stress at Break, Flexural Modulus**

The measurements were conducted after 96 h conditioning time (at 23°C at 50 % relative humidity) of the test specimen.

Tensile Modulus was measured according to ISO 527-2 (cross head speed = 1 mm/min; 23 °C) using injection moulded specimens as described in EN ISO 1873-2 (dog bone shape, 4 mm thickness).

Tensile strength and tensile Strain at Break was measured according to ISO 527-2 (cross head speed = 50 mm/min; 23°C) using injection moulded specimens as described in EN ISO 1873-2 (dog bone shape, 4 mm thickness).

Tensile Strain at Tensile Strength was determined according to ISO 527-2 with an elongation rate of 50 mm/min until the specimen broke using injection moulded specimens as described in EN ISO 1873-2 (dog bone shape, 4 mm thickness).

Tensile Stress at Break was determined according to ISO 527-2 (cross head speed = 50 mm/min) on samples prepared from compression-moulded plaques having a sample thickness of 4 mm.

Flexural modulus is determined according to ISO 178 standard.

l) Impact strength was determined as Charpy Impact Strength according to ISO 179-1/1eA at +23 °C (Notched) or according to ISO 179-1/1eU +23 °C (Unnotched) on injection moulded specimens of 80 x 10 x 4 mm prepared according to EN ISO 1873-2. According to this standard samples are tested after 96 hours.

m) Fogging: Fogging gravimetric is measured according to ISO 75201, method B on specimens (diameter 80 mm +/- 1 mm, thickness 2 mm) cut out from an injection moulded plate. Fogging means the evaporation of volatiles matters of trim materials for the interior of vehicles. This method evaluates the volatility of organic constituents by gravimetric measurements. The samples were dried at room temperature for 24 h using silica gel in a desiccator. The test was done at for 16 hours at 100°C. The beakers have to be closed by using tarred aluminium foils (diameter 103 mm, thickness 0.03 mm) and glass plates and the cooling plates (21 °C) on top. After the testing time (16 h +/- 10 min at 100 °C +/- 0.3 °C) the glass plates have to be removed, the aluminium foils are removed, dried 3.5 - 4.0 hours in a desciccator at room temperature, using silica gel as disciccant and weighted back. The gravimetric fogging value "G" (mg) shall be determined by the following equation:

$$G = \text{weight of aluminium foil after fogging test- tare of the aluminium foil, in mg}$$

G sample =Average in mg of the 2 foils used for 2 specimens of each sample

In Table 1 several examples (comparative-CE; inventive-IE) are summarized.

Different blends of recycled material were used. The blends are characterized by the following properties:

Blend A1: total C2 content 10-15 wt%, C2 (CF) content 8-12 wt%, C2 (SF) content 29-32 wt%, $MFR_2$ 12 - 14 g/ 10 min, tensile modulus 1200 - 1300 MPa, Impact strength (charpy test 23°C) 5-6 $KJ/m^2$;

Blend A2: total C2 content 6-7 wt%, C2 (CF) content 4-5 wt%, C2 (SF) content 29-30 wt%, $MFR_2$ 80 - 85 g/ 10 min, tensile modulus 1200 - 1300 MPa, Impact strength (charpy test 23°C) 3-4 $KJ/m^2$;

Blend A5: total C2 content 9-11 wt%, C2 (CF) content 7-8 wt%, C2 (SF) content 32-33 wt%, $MFR_2$ 24 - 25 g/ 10 min, tensile modulus 1300 - 1400 MPa, Impact strength (charpy test 23°C) 5-6 $KJ/m^2$;

The reactor modified heterophasic propylene copolymer (HPC) has a melt flow rate $MFR_2$ (230°C, 2.16 kg, measured according to ISO 1133) of 17-19 g/10 min.

Table 1 refers to a polyolefin compositions comprising:

- Comparative Example (CE1): one first polypropylene homopolymer (PPH-1, $MFR_2$ of 20 g/10 min) and a second polypropylene homopolymer (PPH-3, $MFR_2$ of 125 g/10 min); one blend of recycled material (Blend A1) and at least one heterophasic propylene copolymer (HPC);
- Comparative Example (CE2): one polypropylene homopolymer (PPH-3, $MFR_2$ of 125 g /10 min); one blend of recycled material (Blend A1) and at least one heterophasic propylene copolymer (HPC);
- Comparative Example (CE3): one first polypropylene homopolymer (PPH-1, $MFR_2$ of 20 g/10 min) and a second polypropylene homopolymer (PPH-3, $MFR_2$ of 125 g/10 min); one blend of recycled material (Blend A1);
- Inventive Example (IE1): one first polypropylene homopolymer (PPH-1, $MFR_2$ of 20 g/10 min) and a second polypropylene homopolymer (PPH-3, $MFR_2$ of 125 g/10 min); one blend of recycled material (Blend A2), at least one heterophasic propylene copolymer (HPC) and at least one ethylene-octene copolymer (EO-CoP);

- Inventive Example (IE2): one first polypropylene homopolymer (PPH-1, MFR$_2$ of 20 g/10 min); one blend of recycled material (Blend A2), at least one heterophasic propylene copolymer (HPC) and at least one ethylene-octene copolymer (EO-CoP);
- Inventive Example (IE3): one first polypropylene homopolymer (PPH-1, MFR$_2$ of 20 g/10 min); one blend of recycled material (Blend A2), at least one heterophasic propylene copolymer (HPC) and at least one ethylene-octene copolymer (EO-CoP);
- Inventive Example (IE4): one first polypropylene homopolymer (PPH-1, MFR$_2$ of 20 g/10 min); one blend of recycled material (Blend A2), at least one aerated heterophasic propylene copolymer (HPC-AR) and at least one ethylene-octene copolymer (EO-CoP);
- Inventive Example (IE5): one first polypropylene homopolymer (PPH-1, MFR$_2$ of 20 g/10 min); one blend of recycled material (Blend A5), at least one heterophasic propylene copolymer (HPC) and at least one ethylene-octene copolymer (EO-CoP);
- Inventive Example (IE6): one first polypropylene homopolymer (PPH-4, MFR$_2$ of 75 g/10 min); one blend of recycled material (Blend A2), at least one heterophasic propylene copolymer (HPC) and at least one ethylene-octene copolymer (EO-CoP).

Glass fibers may be obtained from one of the following suppliers: OC (Owens Corning), PPG / NEG, Johns Manville, 3B, Jushi, Taiwan Glass, Camelyaf, CPIC, Taishan, Glass fibers 1.2. (average length 4 mm, average diameter 13 $\mu$m) and 4.1 (average length 4.5 mm, average diameter 13 $\mu$m) are used.

The following additives were used: Antioxidants: AO1 (Irganox 1010 (FF)), AO2 (Irganox B 225 (FF)), AO3 (Irganox PS-802 FL); Black Pigment (Plasblak PE6121, commercially available from Cabot); Dosing agent: HC001A-B1, PP homopolymer power; Coupling agent: AP 1.5, polypropylene highly functionalized with maleic anhydride.

As can be seen in Table 1 the fogging value of the polyolefin compositions according to the invention (IE1-IE6) are in each case lower than the fogging values of the comparative examples.

At the same time the physical properties of the polyolefin composition according to the inventive examples such as melt flow rate, tensile modulus and charpy impact strength are within the same range as the comparative examples.

Table 1

| Components | | CE1 | CE2 | CE3 | IE1 | IE2 | IE3 | IE4 | IE5 | IE6 |
|---|---|---|---|---|---|---|---|---|---|---|
| | | wt% | wt% | wt% | wt% | wt% | wt% | wt% | wt% | wt% |
| PPH-1 | | 12 | | 15 | 12 | 25 | 25 | 25 | 25 | |
| PPH-3 | | 15 | 22 | 22 | 13 | | | | | |
| HPC | | 10 | 15 | | 10 | 10 | 10 | | 10 | |
| HPC-AR | | | | | | | | 10 | | 10 |
| PPH-4 | | | | | | | | | | 25 |
| EO-CoP | | | | | 2 | 2 | 2 | 2 | 2 | 2 |
| Blend A1 | | 39,80 | 39,80 | 39,80 | | | | | | |
| Blend A2 | | | | | 39,30 | 39,30 | 39,30 | 39,30 | | 39,30 |
| Blend A5 | | | | | | | | | 39,30 | |
| GLASS 1.2 | | 20,00 | 20,00 | 20,00 | 20,00 | 20,00 | 20,00 | 20,00 | 20,00 | 20,00 |
| AP1.5 | | 1,00 | 1,00 | 1,00 | 1,00 | 1,00 | 1,00 | 1,00 | 1,00 | 1,00 |
| HC001A-B1 | | 0,85 | 0,85 | 0,85 | 1,35 | 1,35 | 1,35 | 1,35 | 1,35 | 1,35 |
| Black Pigment | | 0,70 | 0,70 | 0,70 | 0,70 | 0,70 | 0,70 | 0,70 | 0,70 | 0,70 |
| AO1 | | 0,25 | 0,25 | 0,25 | | | | | | |
| AO2 | | | | | 0,25 | 0,25 | 0,25 | 0,25 | 0,25 | 0,25 |
| AO3 | | 0,40 | 0,40 | 0,40 | 0,40 | 0,40 | 0,40 | 0,40 | 0,40 | 0,40 |
| | unit | | | | | | | | | |
| fogging (gravimetric, plaques) IM, 2 mm | | 2,99 | 2,93 | 2,88 | 1,35 | 1,33 | 1,49 | 1,57 | 1,3 | 1,36 |

(continued)

|  |  | CE1 | CE2 | CE3 | IE1 | IE2 | IE3 | IE4 | IE5 | IE6 |
|---|---|---|---|---|---|---|---|---|---|---|
| MFR 230°C/2,16kg | g/10 min | 11,4 | 13,3 | 13,0 | 12,2 | 9,2 | 9,1 | 9,5 | 9,3 | 14,7 |
| Flexural modulus (23°C) | MPa | 3985 | 3848 | 4173 | 4063 | 4126 | 4894 | 4855 | 4689 | 4577 |
| Tensile modulus (@50 mm/min) 23°C | MPa | 4599 | 4454 | 4824 | 4697 | 4695 | 4898 | 4864 | 4682 | 4575 |
| Charpy leA +23°C | kJ/m2 | 7,2 | 7,6 | 6,3 | 6,6 | 7,2 | 7,4 | 7,5 | 7,1 | 7,8 |

**Claims**

1. Polyolefin composition comprising

    a) 20-30 wt% (based on the overall weight of the polymer composition) of at least one polypropylene homopolymer,
    b) 10-45 wt% (based on the overall weight of the polymer composition) of a blend of recycled plastic material comprising polypropylene and polyethylene in a ratio between 3 : 7 and 49.5:1, which is recovered from a waste plastic material derived from post-consumer and/or post-industrial waste;
    c) 7-15 wt% (based on the overall weight of the polymer composition) of at least one heterophasic propylene copolymer;
    d) 1-4 wt% (based on the overall weight of the polymer composition) of at least one ethylene/octene copolymer (C2/C8) elastomer;
    e) 15-25 wt% (based on the overall weight of the polymer composition) of glass fibers; and
    f) 0.5-2.5 wt% (based on the overall weight of the polymer composition) of at least one coupling agent,
    and optionally further additives, wherein the sum of all ingredients add always up to 100 wt%;

    wherein the polyolefin composition is **characterized by**

    - a fogging value of 1.00 - 2.00 (measured gravimetrically according to ISO 75201, method B).

2. Polyolefin composition according to claim 1, **characterized by** a fogging value of 1.30-1.60, preferably of 1.30 - 1.57, more preferably a fogging value of 1.3 - 1.5 (measured gravimetrically according to ISO 75201, method B).

3. Polyolefin composition according to any one of the preceding claims, **characterized by** a melt flow rate $MFR_2$ (230°C, 2.16 kg, measured according to ISO 1133) of at least 7 g/10 min; preferably in the range between 8 and 15 g/10 min, preferably between 9 and 15 g/10min, more preferably between 9 and 13 g/10min.

4. Polyolefin composition according to any one of the preceding claims, **characterized by** a tensile modulus (ISO 527-2) of at least 3.5 GPa, preferably of at least 4 GPa; more preferably of at least 4.5 GPa, in particular in a range between 4 and 5 GPa, more in particular in a range between 4.5 and 5 GPa.

5. Polyolefin composition according to any one of the preceding claims **characterized by** a flexural modulus (ISO 178) of at least 3.5 GPa, preferably of at least 4 GPa; more preferably of at least 4.5 GPa, in particular in a range between 4 and 5 GPa, more in particular in a range between 4.5 and 5 GPa.

6. Polyolefin composition according to any one of the preceding claims, **characterized by** an impact strength (ISO179-1, Charpy 1eA +23°C) of at least 5.0 $kJ/m^2$, preferably of at least 6.0 $kJ/m^2$, more preferably at least 6.5 $kJ/m^2$, still more preferably of at least 7.0 $kJ/m^2$, in particular in a range between 6.0 and 9.0 $kJ/m^2$, more in particular in a range between 6.5 and 8.0 $kJ/m^2$, even more particular in a range between 7.0 and 8.0 $kJ/m^2$.

7. Polyolefin composition according to any one of the preceding claims, **characterized in that** the polypropylene homopolymer a) is selected from a group comprising

- at least one polypropylene homopolymer (PPH-1) having a melt flow rate $MFR_2$ (230°C, 2.16 kg, measured according to ISO 1133) in the range of range of 10 to 30 g/10min,;
- at least one polypropylene homopolymer (PPH-2) having a melt flow rate $MFR_2$ (230°C, 2.16 kg, measured according to ISO 1133) in the range of 60 to 100 g/10 min,;
- at least one polypropylene homopolymer (PPH-3) having a melt flow rate $MFR_2$ (230°C, 2.16 kg, measured according to ISO 1133) in the range of 100 to 150 g/10 min,;
- at least one polypropylene homopolymer (PPH-4) having a melt flow rate $MFR_2$ (230°C, 2.16 kg, measured according to ISO 1133) in the range of 50 to 100 g/10 min.

8. Polyolefin composition according to any one of the preceding claims, **characterized in that** it comprises 20 - 40 wt%, preferably 30 - 40 wt% (based on the overall weight of the polyolefin composition) of the blend of recycled plastic material b) comprising polypropylene and polyethylene and having a melt flow rate $MFR_2$ (230°C, 2.16 kg, measured according to ISO 1133) in the range of 5 - 100g/10 min, preferably of 10 - 90 g/10 min, more preferably of 15 - 50 g/10min, such as 80 to 85g/10min or 20 to 30 g/10 min.

9. Polyolefin composition according to any one of the preceding claims **characterized in that** the at least one heterophasic propylene copolymer c) is

- at least one reactor heterophasic propylene copolymer (HPC)having a melt flow rate $MFR_2$ (230°C, 2.16 kg, measured according to ISO 1133) in the range of 10 to 25 g/10 min, preferably of 15 to 20 g/10 min, more preferably of 17 to 19 g/10 min.

10. Polyolefin composition according to any one of the preceding claims **characterized in that** the at least one elastomer d) is an ethylene based 1-octene elastomer.

11. Polyolefin composition according to any one of the preceding claims **characterized in that** the glass fibers e) have an average length of 2.0 to 10.0 mm, preferably in the range of 2.0 to 8.0 mm, even more preferably in the range of 2.0 to 6.0 mm and an average diameter of from 5 to 20 $\mu$m, more preferably from 8 to 18 $\mu$m, still more preferably 8 to 15 $\mu$m.

12. Polyolefin composition according to any one of the preceding claims **characterized in that** the at least one coupling agent f) is a functionalized polypropylene, in particular a polypropylene functionalized with maleic anhydride (MAH).

13. Use of a polyolefin composition according to any one of the preceding claims in the manufacture of structural products, appliances, automotive articles.

14. An article comprising the polyolefin composition according to any one of the claims 1 to 11.

15. A process for preparing the polyolefin composition according to any one of the claims 1 to 11, comprising the steps of

- providing a mixture of the at least one polypropylene homopolymer a); the blend of recycled material b), the at least one heterophasic propylene copolymer c); the at least one ethylene/octene copolymer (C2/C8) elastomer d), glass fibers e) and the at least one coupling agent;
- melting the mixture in an extruder, and
- optionally pelletizing the obtained polyolefin composition.

**Patentansprüche**

1. Polyolefinzusammensetzung, umfassend

a) 20 bis 30 Gew.-% (bezogen auf das Gesamtgewicht der Polymerzusammensetzung) mindestens eines Polypropylen-Homopolymers,
b) 10 bis 45 Gew.-% (bezogen auf das Gesamtgewicht der Polymerzusammensetzung) einer Mischung aus recyceltem Kunststoffmaterial, umfassend Polypropylen und Polyethylen in einem Verhältnis zwischen 3:7 und 49,5:1, das aus einem Kunststoffabfallmaterial gewonnen wird, das aus Post-Consumer- und/oder Post-Industrial-Abfällen stammt;

c) 7 bis 15 Gew.-% (bezogen auf das Gesamtgewicht der Polymerzusammensetzung) mindestens eines heterophasischen Propylen-Copolymers;

d) 1 bis 4 Gew.-% (bezogen auf das Gesamtgewicht der Polymerzusammensetzung) mindestens eines Ethylen/Octen-Copolymers (C2/C8) Elastomers;

e) 15-25 Gew.-% (bezogen auf das Gesamtgewicht der Polymerzusammensetzung) Glasfasern; und

f) 0,5 bis 2,5 Gew.-% (bezogen auf das Gesamtgewicht der Polymerzusammensetzung) mindestens eines Haftvermittlers,

und gegebenenfalls weitere Additive, wobei die Summe aller Bestandteile immer 100 Gew.-% ergibt;

wobei die Polyolefinzusammensetzung **gekennzeichnet ist durch**

- einen Fogging-Wert von 1,00-2,00 (gemessen gravimetrisch gemäß ISO 75201, Methode B).

2. Polyolefinzusammensetzung nach Anspruch 1, **gekennzeichnet durch** einen Fogging-Wert von 1,30-1,60, vorzugsweise von 1,30-1,57, noch bevorzugter einen Fogging-Wert von 1,3-1,5 (gemessen gravimetrisch gemäß ISO 75201, Methode B).

3. Polyolefinzusammensetzung nach einem der vorstehenden Ansprüche, **gekennzeichnet durch** eine Schmelzflussrate $MFR_2$ (230 °C, 2,16 kg, gemessen gemäß ISO 1133) von mindestens 7 g/10 min, vorzugsweise im Bereich zwischen 8 und 15 g/10 min, vorzugsweise zwischen 9 und 15 g/10 min, noch bevorzugter zwischen 9 und 13 g/10 min.

4. Polyolefinzusammensetzung nach einem der vorstehenden Ansprüche, **gekennzeichnet durch** einen Zugmodul (ISO 527-2) von mindestens 3,5 GPa, vorzugsweise von mindestens 4 GPa; noch bevorzugter von mindestens 4,5 GPa, insbesondere im Bereich zwischen 4 und 5 GPa, noch insbesondere im Bereich zwischen 4,5 und 5 GPa.

5. Polyolefinzusammensetzung nach einem der vorstehenden Ansprüche, **gekennzeichnet durch** einen Biegemodul (ISO 178) von mindestens 3,5 GPa, vorzugsweise von mindestens 4 GPa; noch bevorzugter von mindestens 4,5 GPa, insbesondere in einem Bereich zwischen 4 und 5 GPa, noch insbesondere in einem Bereich zwischen 4,5 und 5 GPa.

6. Polyolefinzusammensetzung nach einem der vorstehenden Ansprüche, **gekennzeichnet durch** eine Schlagzähigkeit (ISO 179-1, Charpy 1eA +23 °C) von mindestens 5,0 kJ/m², vorzugsweise von mindestens 6,0 kJ/m², noch bevorzugter von mindestens 6,5 kJ/m², noch bevorzugter von mindestens 7,0 kJ/m², insbesondere in einem Bereich zwischen 6,0 und 9,0 kJ/m², insbesondere in einem Bereich zwischen 6,5 und 8,0 kJ/m², noch insbesondere in einem Bereich zwischen 7,0 und 8,0 kJ/m² .

7. Polyolefinzusammensetzung nach einem der vorstehenden Ansprüche, **dadurch gekennzeichnet, dass** das Polypropylen-Homopolymer a) ausgewählt ist aus einer Gruppe, die umfasst

- mindestens einem Polypropylen-Homopolymer (PPH-1) mit einer Schmelzflussrate $MFR_2$ (230 °C, 2,16 kg, gemessen gemäß ISO 1133) im Bereich von 10 bis 30 g/10 min;
- mindestens einem Polypropylen-Homopolymer (PPH-2) mit einer Schmelzflussrate $MFR_2$ (230 °C, 2,16 kg, gemessen gemäß ISO 1133) im Bereich von 60 bis 100 g/10 min;
- mindestens ein Polypropylen-Homopolymer (PPH-3) mit einer Schmelzflussrate $MFR_2$ (230 °C, 2,16 kg, gemessen gemäß ISO 1133) im Bereich von 100 bis 150 g/10 min;
- mindestens ein Polypropylen-Homopolymer (PPH-4) mit einer Schmelzflussrate $MFR_2$ (230 °C, 2,16 kg, gemessen gemäß ISO 1133) im Bereich von 50 bis 100 g/10 min.

8. Polyolefinzusammensetzung nach einem der vorstehenden Ansprüche, **dadurch gekennzeichnet, dass** diese 20 bis 40 Gew.-%, vorzugsweise 30 bis 40 Gew.-% (bezogen auf das Gesamtgewicht der Polyolefinzusammensetzung) der Mischung aus recyceltem Kunststoffmaterial b) umfassend Polypropylen und Polyethylen mit einer Schmelzflussrate $MFR_2$ (230 °C, 2,16 kg, gemessen gemäß ISO 1133) im Bereich von 5 bis 100 g/10 min, vorzugsweise von 10 bis 90 g/10 min, noch bevorzugter von 15 bis 50 g/10 min, wie beispielsweise 80 bis 85 g/10 min oder 20 bis 30 g/10 min, umfasst.

9. Polyolefinzusammensetzung nach einem der vorstehenden Ansprüche, **dadurch gekennzeichnet, dass** das mindestens eine heterophasische Propylen-Copolymer c)

- mindestens ein Reaktor-heterophasisches Propylen-Copolymer (HPC) mit einer Schmelzflussrate $MFR_2$ (230 °C, 2,16 kg, gemessen gemäß ISO 1133) im Bereich von 10 bis 25 g/10 min, vorzugsweise von 15 bis 20 g/10 min, noch bevorzugter von 17 bis 19 g/10 min aufweist.

10. Polyolefinzusammensetzung nach einem der vorstehenden Ansprüche, **dadurch gekennzeichnet, dass** das mindestens eine Elastomer d) ein 1-Octen-Elastomer auf Ethylenbasis ist.

11. Polyolefinzusammensetzung nach einem der vorstehenden Ansprüche, **dadurch gekennzeichnet, dass** die Glasfasern e) eine durchschnittliche Länge von 2,0 bis 10,0 mm, vorzugsweise im Bereich von 2,0 bis 8,0 mm, noch bevorzugter im Bereich von 2,0 bis 6,0 mm und einen durchschnittlichen Durchmesser von 5 bis 20 $\mu$m, noch bevorzugter von 8 bis 18 $\mu$m, noch mehr bevorzugt von 8 bis 15 $\mu$m aufweisen.

12. Polyolefinzusammensetzung nach einem der vorstehenden Ansprüche, **dadurch gekennzeichnet, dass** der mindestens eine Haftvermittler f) ein funktionalisiertes Polypropylen, insbesondere ein mit Maleinsäureanhydrid (MAH) funktionalisiertes Polypropylen ist.

13. Verwendung einer Polyolefinzusammensetzung gemäß einem der vorstehenden Ansprüche zur Herstellung von Strukturprodukten, Geräten, Automobilartikeln.

14. Artikel, der die Polyolefinzusammensetzung gemäß einem der Ansprüche 1 bis 11 umfasst.

15. Verfahren zur Herstellung der Polyolefinzusammensetzung gemäß einem der Ansprüche 1 bis 11, umfassend die folgenden Schritte:

- Bereitstellen einer Mischung aus dem mindestens einen Polypropylen-Homopolymer a); der Mischung aus recyceltem Material b), dem mindestens einen heterophasischen Propylen-Copolymer c); dem mindestens einem Ethylen/Octen-Copolymer (C2/C8) Elastomer d), Glasfasern e) und dem mindestens einen Haftvermittler;
- Schmelzen der Mischung in einem Extruder und
- optionales Pelletieren der erhaltenen Polyolefinzusammensetzung.

**Revendications**

1. Composition de polyoléfine comprenant

a) 20 à 30% en poids (par rapport au poids total de la composition polymère) d'au moins un homopolymère de polypropylène,
b) 10 à 45% en poids (par rapport au poids total de la composition polymère) d'un mélange de matière plastique recyclée comprenant du polypropylène et du polyéthylène dans un rapport compris entre 3:7 et 49,5:1, qui est récupérée à partir de déchets de matières plastiques dérivés de déchets post-consommation et/ou post-industriels ;
c) 7 à 15% en poids (par rapport au poids total de la composition polymère) d'au moins un copolymère de propylène hétérophasique ;
d) 1 à 4% en poids (par rapport au poids total de la composition polymère) d'au moins un élastomère de copolymère d'éthylène/octène (C2/C8);
e) 15 à 25% en poids (par rapport au poids total de la composition polymère) de fibres de verre ; et
f) 0,5 à 2,5% en poids (par rapport au poids total de la composition polymère) d'au moins un agent de couplage,

et facultativement d'autres additifs, où la somme de tous les ingrédients est toujours de 100% en poids ; dans laquelle la composition de polyoléfine est **caractérisée par**

- une valeur de condensation de 1,00 à 2,00 (mesurée par gravimétrie selon la norme ISO 75201, méthode B).

2. Composition de polyoléfine selon la revendication 1, **caractérisée par** une valeur de condensation de 1,30 à 1,60, de préférence de 1,30 à 1,57, plus préférablement par une valeur de condensation de 1,3 à 1,5 (mesurée par gravimétrie selon la norme ISO 75201, méthode B).

3. Composition de polyoléfine selon l'une quelconque des revendications précédentes, **caractérisée par** un indice de fluidité MFR$_2$ (230°C, 2,16 kg, mesuré selon la norme ISO 1133) d'au moins 7 g/10 min ; de préférence dans la plage comprise entre 8 et 15 g/10 min, de préférence entre 9 et 15 g/10 min, plus préférablement entre 9 et 13 g/10 min.

4. Composition de polyoléfine selon l'une quelconque des revendications précédentes, **caractérisée par** un module de traction (ISO 527-2) d'au moins 3,5 GPa, de préférence d'au moins 4 GPa ; plus préférablement d'au moins 4,5 GPa, en particulier dans une plage comprise entre 4 et 5 GPa, plus particulièrement dans une plage comprise entre 4,5 et 5 GPa.

5. Composition de polyoléfine selon l'une quelconque des revendications précédentes, **caractérisée par** un module de flexion (ISO 178) d'au moins 3,5 GPa, de préférence d'au moins 4 GPa ; plus préférablement d'au moins 4,5 GPa, en particulier dans une plage comprise entre 4 et 5 GPa, plus particulièrement dans une plage comprise entre 4,5 et 5 GPa.

6. Composition de polyoléfine selon l'une quelconque des revendications précédentes, **caractérisée par** une résistance aux chocs (ISO179-1, Charpy 1eA +23°C) d'au moins 5,0 kJ/m$^2$, de préférence d'au moins 6,0 kJ/m$^2$, plus préférablement d'au moins 6,5 kJ/m$^2$, encore plus préférablement d'au moins 7,0 kJ/m$^2$, en particulier dans une plage comprise entre 6,0 et 9,0 kJ/m$^2$, plus particulièrement dans une plage comprise entre 6,5 et 8,0 kJ/m$^2$, encore plus particulièrement dans une plage comprise entre 7,0 et 8,0 kJ/m$^2$.

7. Composition de polyoléfine selon l'une quelconque des revendications précédentes, **caractérisée en ce que** l'homopolymère de polypropylène a) est choisi dans un groupe comprenant

   - au moins un homopolymère de polypropylène (PPH-1) ayant un indice de fluidité MFR$_2$ (230°C, 2,16 kg, mesuré selon la norme ISO 1133) dans la plage allant de 10 à 30 g/10 min, ;
   - au moins un homopolymère de polypropylène (PPH-2) ayant un indice de fluidité MFR$_2$ (230°C, 2,16 kg, mesuré selon la norme ISO 1133) dans la plage allant de 60 à 100 g/10 min, ;
   - au moins un homopolymère de polypropylène (PPH-3) ayant un indice de fluidité MFR$_2$ (230°C, 2,16 kg, mesuré selon la norme ISO 1133) dans la plage allant de 100 à 150 g/10 min, ;
   - au moins un homopolymère de polypropylène (PPH-4) ayant un indice de fluidité MFR$_2$ (230°C, 2,16 kg, mesuré selon la norme ISO 1133) dans la plage allant de 50 à 100 g/10 min.

8. Composition de polyoléfine selon l'une quelconque des revendications précédentes, **caractérisée en ce qu'**elle comprend 20 à 40% en poids, de préférence 30 à 40% en poids (par rapport au poids total de la composition de polyoléfine) du mélange de matière plastique recyclée b) comprenant du polypropylène et du polyéthylène et ayant un indice de fluidité MFR$_2$ (230°C, 2,16 kg, mesuré selon la norme ISO 1133) dans la plage allant de 5 à 100 g/10 min, de préférence de 10 à 90 g/10 min, plus préférablement de 15 à 50 g/10 min, par exemple de 80 à 85 g/10 min ou de 20 à 30 g/10 min.

9. Composition de polyoléfine selon l'une quelconque des revendications précédentes, **caractérisée en ce que** l'au moins un copolymère de propylène hétérophasique c) est

   - au moins un copolymère de propylène hétérophasique (HPC) de réacteur ayant un indice de fluidité MFR$_2$ (230°C, 2,16 kg, mesuré selon la norme ISO 1133) dans la plage allant de 10 à 25 g/10 min, de préférence de 15 à 20 g/10 min, plus préférablement de 17 à 19 g/10 min.

10. Composition de polyoléfine selon l'une quelconque des revendications précédentes, **caractérisée en ce que** l'au moins un élastomère d) est un élastomère 1-octène à base d'éthylène.

11. Composition de polyoléfine selon l'une quelconque des revendications précédentes, **caractérisée en ce que** les fibres de verre e) ont une longueur moyenne allant de 2,0 à 10,0 mm, de préférence dans la plage allant de 2,0 à 8,0 mm, de manière encore plus préférée dans la plage allant de 2,0 à 6,0 mm, et un diamètre moyen allant de 5 à 20 $\mu$m, plus préférablement de 8 à 18 $\mu$m, encore plus préférablement de 8 à 15 $\mu$m.

12. Composition de polyoléfine selon l'une quelconque des revendications précédentes, **caractérisée en ce que** l'au moins un agent de couplage f) est un polypropylène fonctionnalisé, en particulier un polypropylène fonctionnalisé avec de l'anhydride maléique (MAH).

**13.** Utilisation d'une composition de polyoléfine selon l'une quelconque des revendications précédentes dans la fabrication de produits structurels, d'appareils électroménagers, d'articles automobiles.

**14.** Article comprenant la composition de polyoléfine selon l'une quelconque des revendications 1 à 11.

**15.** Procédé de préparation de la composition de polyoléfine selon l'une quelconque des revendications 1 à 11, comprenant les étapes de

- fourniture d'un mélange de l'au moins un homopolymère de polypropylène a) ; du mélange de matière recyclée b), de l'au moins un copolymère de propylène hétérophasique c) ; de l'au moins un élastomère de copolymère d'éthylène/octène (C2/C8) d), de fibres de verre e) et de l'au moins un agent de couplage ;
- fusion du mélange dans une extrudeuse, et
- facultativement pastillage de la composition de polyoléfine obtenue.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2845876 B1

- EP 2386602 A1

**Non-patent literature cited in the description**

- *Chemical Reviews*, 2000, vol. 100 (4), 1316-1327
- *CHEMICAL ABSTRACTS*, 6683-19-8
- *CHEMICAL ABSTRACTS*, 31570-04-4
- *CHEMICAL ABSTRACTS*, 693- 36-7
- *CHEMICAL ABSTRACTS*, 11097-59-9
- *CHEMICAL ABSTRACTS*, 1592-23-0
- *CHEMICAL ABSTRACTS*, 557-05-1
- *CHEMICAL ABSTRACTS*, 60676-86-0
- *CHEMICAL ABSTRACTS*, 7631-86-9
- *CHEMICAL ABSTRACTS*, 112926-00-8
- *CHEMICAL ABSTRACTS*, 1318-74-7
- *CHEMICAL ABSTRACTS*, 1344-00-9
- *CHEMICAL ABSTRACTS*, 92704-41-1
- *CHEMICAL ABSTRACTS*, 1327-36-2
- *CHEMICAL ABSTRACTS*, 1344-95-2
- *CHEMICAL ABSTRACTS*, 1344-01-0
- *CHEMICAL ABSTRACTS*, 52829-07-9
- *CHEMICAL ABSTRACTS*, 1843-05-6
- *CHEMICAL ABSTRACTS*, 532-32-1
- *CHEMICAL ABSTRACTS*, 135861-56-2
- *CHEMICAL ABSTRACTS*, 97593-29-8
- *CHEMICAL ABSTRACTS*, 71786-60-2
- *CHEMICAL ABSTRACTS*, 61791-31-9
- *CHEMICAL ABSTRACTS*, 204-393-1

- **SIGNORET et al.** Alterations of plastic spectra in MIR and the potential impacts on identification towards recycling. *Resources, conservation and Recycling journal*, 2020, vol. 161
- **SINGH, G.** ; **KOTHARI, A.** ; **GUPTA, V.** *Polymer Testing*, 2009, vol. 28 (5), 475
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **CHENG, H. N.** *Macromolecules*, 1984, vol. 17, 1950
- **L. RESCONI** ; **L. CAVALLO** ; **A. FAIT** ; **F. PIEMONTESI**. *Chem. Rev.*, 2000, vol. 100 (4), 1253
- **W-J. WANG** ; **S. ZHU**. *Macromolecules*, 2000, vol. 33, 1157
- **WANG, W-J.** ; **ZHU, S.** *Macromolecules*, 2000, vol. 33, 1157
- **KAKUGO, M.** ; **NAITO, Y.** ; **MIZUNUMA, K.** ; **MIYATAKE, T.** *Macromolecules*, 1982, vol. 15, 1150